# EUROPÄISCHE PATENTSCHRIFT

(11) **EP 1 758 216 B1**
(45) Veröffentlichungstag und Bekanntmachung des Hinweises auf die Patenterteilung: **10.04.2013**
(21) Anmeldenummer: 05018629.5
(22) Anmeldetag: 26.08.2005
(51) Int. Cl.: H01S 3/223, G02B 27/09, B23K 26/06, G02B 5/00, H01S 3/00

(54) **Zweistufige Blende für einen Laserstrahl**
Two-stage diaphragm for a laser beam
Diaphragme à deux niveaux pour un faisceau laser

(43) Veröffentlichungstag der Anmeldung: 28.02.2007
(73) Patentinhaber: Trumpf Laser- und Systemtechnik GmbH, 71254 Ditzingen (DE)
(72) Erfinder: Metz, Mathias, 71636 Ludwigsburg (DE); Bytow, Peter, 75397 Simmozheim (DE)
(74) Vertreter: Kohler Schmid Möbus

(56) Entgegenhaltungen:
- EP-A- 0 346 116
- DE-A1- 19 910 725
- US-A- 5 161 238
- US-A- 6 058 132
- US-B1- 6 266 352
- US-B1- 6 329 632
- PATENT ABSTRACTS OF JAPAN Bd. 2002, Nr. 08, 5. August 2002 (2002-08-05) & JP 2002 120080 A (HITACHI VIA MECHANICS LTD), 23. April 2002 (2002-04-23)

## Beschreibung

Die Erfindung betrifft eine zweistufige Blende für einen Laserstrahlgemäß dem Oberbegriff von Anspruch 1.

Eine derartige zweistufige Blende ist beispielsweise aus der EP-A-0 346 116 bekannt geworden.

Die Leistung eines CO₂-Laserstrahls wird in der Regel über die Laserleistungssteuerung eingestellt. Für die Feineinstellung der Laserleistung werden auch Blenden eingesetzt. Eine Blende schneidet einen Teil der Laserleistung ab. Durch verschiedene Blendendurchmesser kann die Laserleistung eines Laserstrahls sehr fein eingestellt werden.

Die aus der eingangs genannten EP-A-0 346 116 bekannte zweistufige Blende dient zur Strahlformung bei der Laserbehandlung an der Hornhaut. Eine Irisblende mit einem veränderlichen runden Blendendurchmesser dient zur Einstellung des maximalen Laserdurchmessers und damit der maximalen Laserleistung. Hinter der Irisblende sind drei Feinblendeneinrichtungen mit jeweils mehreren beweglich angeordneten Feinblenden vorgesehen, die jeweils unterschiedliche Aperturen zur Formung des Strahlquerschnitts aufweisen. Die erste Feinblendeneinrichtung weist neben mehreren unterschiedlichen Ringblenden auch eine Lochblende auf, deren Blendendurchmesser dem maximalen Blendendurchmesser der Irisblende entspricht. Die zweite Feinblendeneinrichtung weist mehrere kleinere Lochblenden auf, deren Blendendurchmesser kleiner als der Blendendurchmesser der einen Lochblende der ersten Feinblendeneinrichtung ist.

Der Erfindung liegt die Aufgabe zugrunde, die Feineinstellung der Laserleistung eines Laserstrahls zu verbessern.

Diese Aufgabe wird erfindungsgemäß gelöst durch eine zweistufige Blende mit den Merkmalen von Patentanspruch 1.

Die Laserleistung des die erfindungsgemäße zweistufige Blende durchdringenden Laserstrahls wird durch ein gezieltes Ausblenden der Laserstrahlung am Rand des Laserstrahls angepasst. Die mithilfe einer Kühleinrichtung gekühlte Vorblende kann die aufgenommene Laserleistung in Form von Wärme an die Kühleinrichtung abgeben.

Vorteilhafterweise sind die mehreren Feinblenden an einem Einstellrad angeordnet, - so dass der Anwender durch Drehen am Einstellrad auf einfache Weise die Feinblende mit dem gewünschten Feinblendendurchmesser einstellen kann. Als Verdrehsicherung für die im Strahlengang befindliche Feinblende kann, z.B. am Einstellrad, eine Rasteinrichtung vorgesehen sein.

Alternativ zu mehreren beweglichen Feinblenden kann die Feinblendeneinrichtung auch nur eine einzige Feinblende, z.B. eine Lamellenblende, aufweisen, deren Feinblendendurchmesser verstellbar ist.

Vorzugsweise sind die Vorblende und die Feinblendeneinrichtung zusammen als eine (Gehäuse)Einheit ausgebildet.

Die Erfindung betrifft auch eine Laserbearbeitungsanlage mit mehreren Laserstrahlen und mit jeweils einer wie oben ausgebildeten zweistufigen Blende für jeden Laserstrahl, wobei bevorzugt die mehreren Laserstrahlen Teilstrahlen eines einzigen Laserstrahls sind.

Die erfindungsgemäßen zweistufigen Blenden kommen besonders vorteilhaft bei Laserbearbeitungsanlagen mit einer Mehrfachaufteilung eines CO₂-Laserstrahls zum Einsatz. Bei einer Mehrfachaufteilung eines CO₂-Laserstrahls entstehen mehrere Teilstrahlen, deren Leistung sich aufgrund unterschiedlicher Toleranzen der optischen Elemente in den Teilstrahlen geringfügig unterscheidet. Gewünscht sind bei derartigen Laserbearbeitungsanlagen jedoch in der Regel identische Laserleistungen, z.B. um identische Teile identisch zu bearbeiten. Mit der erfindungsgemäßen zweistufigen Blende kann jeder Teilstrahl auf die gewünschte Leistung eingestellt werden.

Die Erfindung betrifft schließlich auch ein Verfahren zum Einstellen der Leistung eines Laserstrahls auf einen Sollwert, wobei in einer ersten Blendenstufe die Leistung des Laserstrahls auf ca. 10% bis ca. 50% oberhalb des Sollwerts reduziert und in einer nachfolgenden zweiten Blendenstufe auf den Sollwert eingestellt wird.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine perspektivische, teilweise geschnittene Ansicht der erfindungsgemäßen zweistufigen Blende;
- Fig. 2: den Längsschnitt der in Fig. 1 gezeigten zweistufige Blende;
- Fig. 3: eine perspektivische Ansicht eines in Fig. 1 und 2 gezeigten Einstellrads der zweistufigen Blende; und
- Fig. 4: eine schematische Darstellung einer Laserbearbeitungsanlage mit mehreren Laserstrahlen und jeweils einer zweistufigen Blende für jeden Laserstrahl.

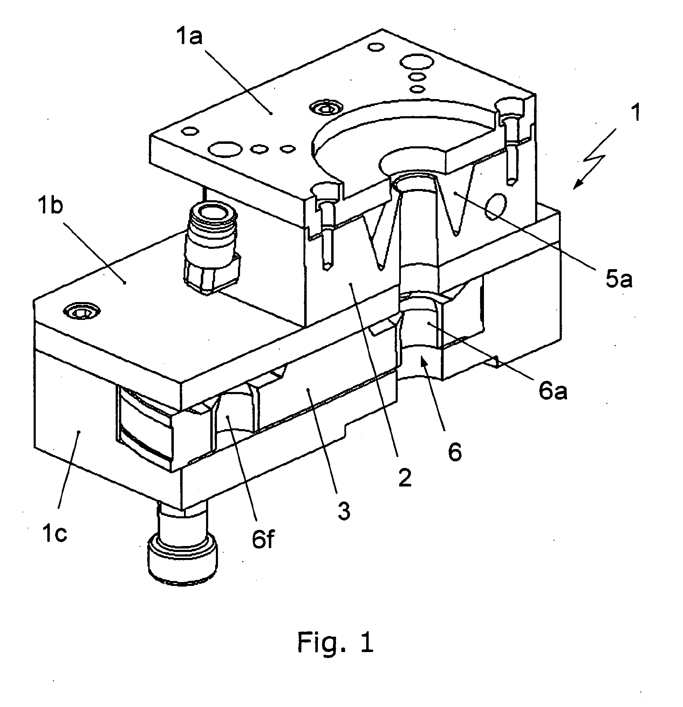

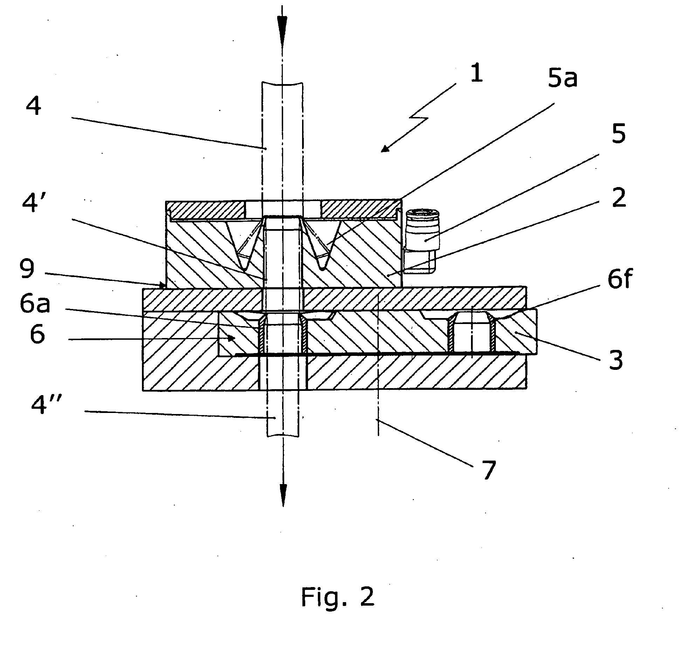

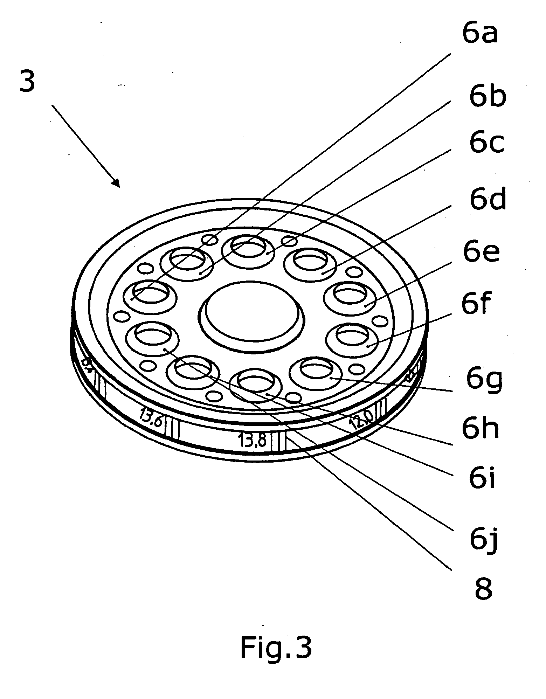

Die in **Fig. 1** und **Fig. 2** gezeigte zweistufige Blende **1** umfasst im Wesentlichen neben Gehäuseteilen **1a** bis **1c** eine Vorblende **2** mit einem festen Blendendurchmesser und ein Einstellrad **3** mit mehreren Feinblenden **6a** bis **6j** (Fig. 3), welche unterschiedliche Blendendurchmesser aufweisen und zusammen eine einstellbare Feinblendeneinrichtung **6** bilden. Das Einstellrad 3 ist exzentrisch zu einem in die zweistufige Blende 1 einfallenden Laserstrahl **4** mit voller Laserleistung bzw. zu einem die Vorblende 2 bzw. die jeweilige Feinblende durchdringenden Laserstrahl **4'** bzw. **4"** mit jeweils reduzierter Laserleistung gelagert, so dass jeweils eine der Feinblenden 6a bis 6j, im gezeigten Ausführungsbeispiel die Feinblende 6a, zentrisch im Laserstrahl 4' angeordnet werden kann. Durch Drehen des Einstellrades 3 um die Drehachse **7** kann jeweils eine andere Feinblende in den Strahlengang gedreht werden. Ein Rastbolzen oder eine Rasterung **8** (**Fig. 3**) legt die Position des Einstellrads 3 und somit die Koaxialität zwischen der Vorblende 2 und der im Laserstrahl 4' befindlichen Feinblende fest.

Im gezeigten Ausführungsbeispiel hat die Vorblende 2 einen Durchmesser von 14 mm und die zehn Feinblenden 6a bis 6j Feinblendendurchmesser von 12.0 bis 13.8 mm. Eine Abstufung der Feinblendendurchmesser von 0.2 mm erlaubt eine sehr feine Einstellung der Laserleistung.

Der zweistufige Blendenaufbau erlaubt eine effektive Kühlung. Die mithilfe einer Kühleinrichtung **5** gekühlte Vorblende 2 nimmt den Großteil der Laserleistung wie folgt auf: Die von der Vorblende 2 ausgeblendete Laserleistung wird in einen Strahlabsorber **5a** gelenkt, dort mehrfach reflektiert und dabei absorbiert. Die bei der Absorption an einen Kühlkörper der Kühleinrichtung 5 abgegebene Wärme wird über das Kühlwasser abgeführt. Die im Strahlengang hinter der Vorblende 2 befindliche Feinblende 6a blendet so viel weitere Leistung aus, dass der austretende Laserstrahl 4" die gewünschte Soll-Leistung aufweist. Die Kühlung der Feinblenden 6a bis 6j findet über die Gehäuseteile 1 b und 1 c bzw. indirekt über die Vorblende 2 statt. Im gezeigten Ausführungsbeispiel bilden die Vorblende 2 und die Feinblendeneinrichtung 6 eine gemeinsame Einheit **9,** können jedoch selbstverständlich auch als getrennte Einheiten ausgebildet sein.

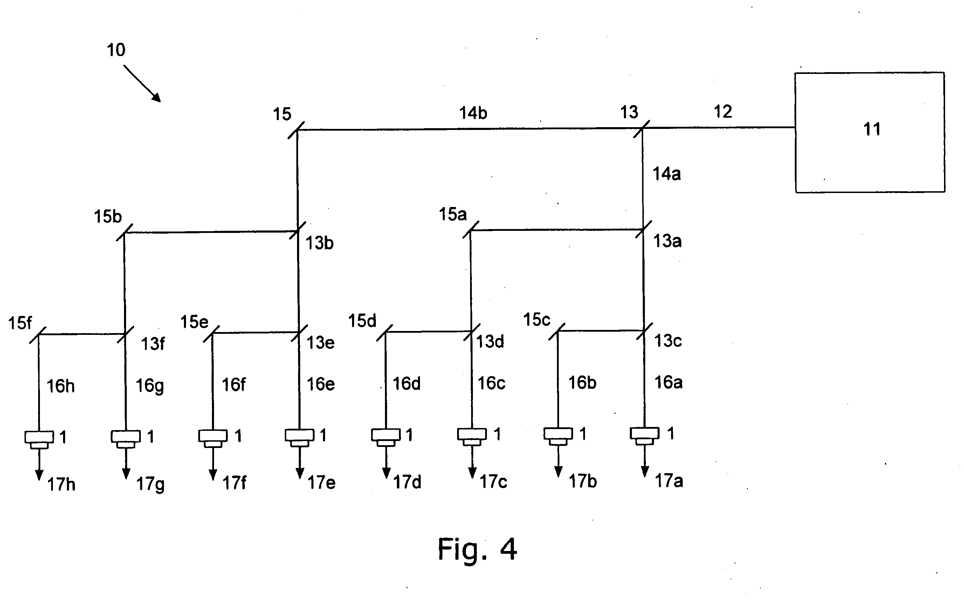

**Fig. 4** zeigt schematisch eine Anlage **10** für die Laserbearbeitung. Der aus einem Laser **11** austretende Laserstrahl **12** fällt auf einen halbdurchlässigen Spiegel 13, der den Laserstrahl in zwei Teilstrahlen **14a** und **14b** nahezu gleicher Leistung aufteilt. Teilstrahl 14a fällt direkt auf einen zweiten halbdurchlässigen Spiegel 13a, Teilstrahl 14b wird über einen vollreflektierenden Umlenkspiegel **15** auf einen dritten halbdurchlässigen Spiegel **13b** gelenkt. Eine dritte Teilungsstufe mit halbdurchlässigen Spiegeln **13c-13f** und mit vollreflektierenden Umlenkspiegeln **15c-15f** schließt sich an, an deren Ende acht Teilstrahlen **16a-16h** entstanden sind. Diese Teilstrahlen 16a-16h unterscheiden sich geringfügig in ihrer Leistung, da die Anzahl der optischen Elemente in den Teil-Strahlengängen unterschiedlich ist und die optischen Eigenschaften der optischen Elemente im Strahlengang fertigungsbedingt leicht variieren.

Jeder Teilstrahl 16a-16h fällt auf eine zweistufige Blende 1 und wird wie oben beschrieben zunächst über die gekühlte Vorblende 2 auf eine Leistung etwas oberhalb des gewünschten Wertes eingestellt. Die Feineinstellung erfolgt dann über die einstellbare Feinblendeneinrichtung 6.

Im dargestellten Beispiel wird ein CO₂-Laserstrahl 12 einer Leistung von 1500 W in acht gleiche Teilstrahlen aufgeteilt. Die Leistung jedes Teilstrahls 16a-16h beträgt vor dem Eintritt in die gekühlte Vorblende 2 etwa 120 W. An der gekühlten Vorblende 2 wird die Leistung der Teilstrahlen auf einen Wert von etwa 95 W reduziert. Abschließend werden die Leistungen der Teilstrahlen jeweils mithilfe der einstellbaren Feinblendeneinrichtung 6 eingestellt. Im dargestellten Beispiel haben die aus den zweistufigen Blenden 1 austretenden Teilstrahlen **14a-14h** eine Leistung von 80 W.

## Patentansprüche

1. Zweistufige Blende (1) zur Strahlformung eines Laserstrahls (4; 16a bis 16h), umfassend eine Vorblende (2) mit rundem Blendenquerschnitt und eine im Strahlengang hinter der Vorblende (2) angeordnete Feinblendeneinrichtung (6) mit mehreren beweglich angeordneten Feinblenden (6a bis 6j), die unterschiedliche runde Feinblendenquerschnitte, deren Blendendurchmesser jeweils kleiner als der Blendendurchmesser der Vorblende (2) sind, aufweisen und die wahlweise in den Strahlengang hinein bewegbar sind,
**dadurch gekennzeichnet, dass** die zweistufige Blende eine Kühleinrichtung (5) mit einem Kühlkörper **dadurch gekennzeichnet**, sowie einen Strahlabsorber (5a) umfasst so dass, im Betrieb die Vorblende (2) mithilfe der Kühleinrichtung (5) gekühlt ist, dass die von der Vorblende (2) ausgeblendete Laserleistung im Strahlabsorber (5a) absorbiert wird, und dass die bei der Absorption an den Kühlkörper der Kühleinrichtung (5) abgegebene Wärme abgeführt wird..

2. Zweistufige Blende nach Anspruch 1, **dadurch gekennzeichnet, dass** die mehreren Feinblenden (6a bis 6j) an einem Einstellrad (3) angeordnet sind.

3. Zweistufige Blende nach Anspruch 1 oder 2, **dadurch gekennzeichnet, dass** eine Rasteinrichtung (8) zur Fixierung der im Strahlengang befindlichen Feinblende (6a bis 6j) vorgesehen ist.

4. Zweistufige Blende nach einem der vorhergehenden Ansprüche, **dadurch gekennzeichnet, dass** die Vorblende (2) und die Feinblendeneinrichtung (6) zusammen als eine Einheit (9) ausgebildet sind.

5. Laserbearbeitungsanlage (10) mit mehreren Laserstrahlen (16a bis 16h) und mit jeweils einer zweistufigen Blende (1) nach einem der vorhergehenden Ansprüche für jeden Laserstrahl (16a bis 16h).

6. Laserbearbeitungsanlage nach Anspruch 5, **dadurch gekennzeichnet, dass** die mehreren Laserstrahlen (16a bis 16h) Teilstrahlen eines einzigen Laserstrahls (12) sind.

7. Verfahren zum Einstellen der Leistung eines Laserstrahls (4; 16a bis 16h) mit einer zweistufigen Blende nach einem der vorherigen Ansprüche auf einen Sollwert, wobei in einer ersten Blendenstufe die Leistung des Laserstrahls (4; 16a bis 16h) auf ca. 10% bis ca. 50% oberhalb des Sollwerts reduziert und in einer nachfolgenden zweiten Blendenstufe auf den Sollwert eingestellt wird.

## Claims

1. Two-stage diaphragm (1) for beam shaping of a laser beam (4; 16a to 16h), comprising a pre-diaphragm (2) with round diaphragm cross-section, and a fine diaphragm device (6) which is arranged in the optical path downstream of the pre-diaphragm (2) and has a plurality of movably arranged fine diaphragms (6a to 6j), which have different round fine diaphragm cross-sections, the diaphragm diameters of which are each smaller than the diaphragm diameter of the pre-diaphragm (2), and can optionally be moved into the optical path, **characterized in that** the two-stage diaphragm comprises a cooling device (5) with a cooling element and a beam absorber (5a) such that the pre-diaphragm (2) is cooled during operation by means of the cooling device (5), the laser power faded out by the pre-diaphragm (2) is absorbed in the beam absorber (5a) and the heat released to the cooling element of the cooling device (5) during absorption is discharged.

2. Two-stage diaphragm according to claim 1, **characterized in that** the plurality of fine diaphragms (6a to 6j) are arranged on an adjustment wheel (3).

3. Two-stage diaphragm according to claim 1 or 2, **characterized in that** a locking device (8) is provided for fixing the fine diaphragm (6a to 6j) located in the optical path.

4. Two-stage diaphragm according to any one of the preceding claims, **characterized in that** the pre-diaphragm (2) and the fine diaphragm device (6) together are formed as one unit (9).

5. Laser processing system (10) comprising a plurality of laser beams (16a to 16h) and one two-stage diaphragm (1) according to any one of the preceding claims for each laser beam (16a to 16h).

6. Laser processing system according to claim 5, **characterized in that** the plurality of laser beams (16a to 16h) are partial beams of one single laser beam (12).

7. Method for setting the power of a laser beam (4; 16a to 16h), comprising a two-stage diaphragm according to any one of the preceding claims, to a desired value, wherein in a first diaphragm stage, the power of the laser beam (4; 16a to 16h) is reduced to a value that is approximately 10% to approximately 50% above the desired value and in a subsequent second diaphragm stage the power is set to the desired value.

## Revendications

1. Diaphragme à deux étages (1) pour la mise en forme d'un faisceau laser (4 ; 16a à 16h), comprenant un prédiaphragme (2) à section de diaphragme ronde et un dispositif de diaphragmes fins (6) disposé derrière le prédiaphragme (2) dans le chemin optique, lequel comprend plusieurs diaphragmes fins (6a à 6j) disposés de manière mobile, qui présentent différentes sections de diaphragme fin rondes dont le diamètre de diaphragme est chaque fois plus petit que le diamètre de diaphragme du prédiaphragme (2) et qui peuvent être déplacés au choix dans le chemin optique, **caractérisé en ce que** le diaphragme à deux étages comprend un dispositif de refroidissement (5) avec un dissipateur de chaleur et un absorbeur de faisceau (5a), de sorte qu'en fonctionnement le prédiaphragme (2) est refroidi à l'aide du dispositif de refroidissement (5), que la puissance laser occultée par le prédiaphragme (2) est absorbée dans l'absorbeur de faisceau (5a) et que la chaleur cédée au dissipateur de chaleur du dispositif de refroidissement (5) lors de l'absorption est dissipée.

2. Diaphragme à deux étages selon la revendication 1, **caractérisé en ce que** lesdits plusieurs diaphragmes fins (6a à 6j) sont disposés sur une bague de réglage (3).

3. Diaphragme à deux étages selon la revendication 1 ou 2, **caractérisé en ce qu'**il est prévu un dispositif d'encliquetage (8) pour la fixation en position du diaphragme fin (6a à 6j) se trouvant dans le chemin optique.

4. Diaphragme à deux étages selon une des revendications précédentes, **caractérisé en ce que** le prédiaphragme (2) et le dispositif de diaphragmes fins (6) sont réalisés ensemble sous la forme d'une unité (9).

5. Installation d'usinage au laser (10) présentant plusieurs faisceaux laser (16a à 16h) et un diaphragme à deux étages (1) selon une des revendications précédentes pour chacun des faisceaux laser (16a à 16h).

6. Installation d'usinage au laser selon la revendication 5, **caractérisée en ce que** lesdits plusieurs faisceaux laser (16a à 16h) sont des faisceaux partiels d'un faisceau laser unique (12).

7. Procédé de réglage de la puissance d'un faisceau laser (4 ; 16a à 16h) à une valeur de consigne au moyen d'un diaphragme à deux étages selon une des revendications précédentes, dans lequel la puissance du faisceau laser (4 ; 16a à 16h) est réduite à une valeur supérieure d'environ 10 % à environ 50 % à la valeur de consigne dans un premier étage de diaphragme et réglée à la valeur de consigne dans un deuxième étage de diaphragme consécutif.
